# NEUE EUROPÄISCHE PATENTSCHRIFT

(11) **EP 1 051 315 B2**
(45) Veröffentlichungstag und Bekanntmachung des Hinweises auf die Entscheidung über den Einspruch: **16.11.2005**
(45) Hinweis auf die Patenterteilung: 07.08.2002
(21) Anmeldenummer: 99907487.5
(22) Anmeldetag: 03.02.1999
(51) Int. Cl.: B60T 7/04

(54) **VERFAHREN UND VORRICHTUNG ZUR STEUERUNG ODER REGELUNG DER BREMSANLAGE EINES FAHRZEUGES NACH DEM "BRAKE-BY-WIRE"-PRINZIP**
METHOD AND DEVICE FOR CONTROLLING OR REGULATING THE BRAKE SYSTEM OF A VEHICLE ACCORDING TO THE BRAKE BY WIRE PRINCIPLE
PROCEDE ET DISPOSITIF POUR LA COMMANDE OU LA REGULATION DU SYSTEME DE FREINAGE D'UN VEHICULE SELON LE PRINCIPE DU FREIN PAR CABLE

(30) Priorität: 07.02.1998 DE 19804932; 10.09.1998 DE 19841335
(43) Veröffentlichungstag der Anmeldung: 15.11.2000
(73) Patentinhaber: Continental Teves AG & Co. oHG, 60488 Frankfurt (DE)
(72) Erfinder: BÖHM, Jürgen, D-65558 Oberneisen (DE); STÖLZL, Stefan, D-69469 Weinheim (DE); OEHLER, Rainer, D-64295 Darmstadt (DE)
(86) Internationale Anmeldenummer: PCT/EP1999/000692
(87) Internationale Veröffentlichungsnummer: WO 1999/039950

(56) Entgegenhaltungen:
- EP-A- 0 768 224
- EP-B- 0 190 411
- DE-A- 19 510 522
- DE-A- 19 510 525
- DE-A- 19 515 842

## Beschreibung

Die Erfindung bezieht sich auf ein verfahren zur Steuerung oder Regelung der Bremsanlage eines Fahrzeuges nach dem Brake-by-Wire-Prinzip, die ein Bremspedal mit einer Pedalmechanik und einer Pedalsensorik, eine elektronische Auswerteeinheit und Radbremsmodule aufweist, mit den Schritten:
- Erfassen der Bremspedalbetätigung durch den Fahrer durch wenigstens zwei Meßeinrichtungen, die die Bremspedalbetätigung charakterisierende Größen ermitteln,
- Ermitteln des Bremswunsches des Fahrers aus den Signalen der Meßeinrichtungen in der elektronischen Auswerteeinheit.

Die Erfindung betrifft ferner eine Vorrichtung zur Vorrichtung zur Steuerung oder Regelung der Bremsanlage eines Fahrzeuges nach dem Brake-by-Wire-Prinzip, die ein Bremspedal mit einer Pedalmechanik und eine Pedalsensorik, mindestens eine elektronisch Auswerteeinheit und Radbremsmodule aufweist, mit
- einer Pedalerfassungseinheit zum Erfassen der Bremspedalbetätigung durch den Fahrer, die aus wenigstens zwei Meßeinrichtungen aufgebaut ist, die die Bremspedalbetätigung charakterisierende Größen erfassen, und
- einer Auswerteeinheit, welche den Bremswunsch des Fahrers aus den Signalen der Meßeinrichtung ermittelt.

Bremsanlagen für Kraftfahrzeuge arbeiten typischerweise nach dem konventionellen Prinzip mit direkter Betätigung einer hydraulischen Betätigungseinrichtung durch das Bremspedal mit Verbindung zu den hydraulischen Radbremsen. Analog des im Flugzeugbau bereits praktizierten Prinzipes des mechanischen Entkoppelns des Steuerknüppels von den Steuerrudern - als "fly-by-wire"-Prinzip bekannt - ist man auch bei Bremsanlagen für Kraftfahrzeuge bemüht, das Bremspedal von der Bremsanlage mechanisch zu entkoppeln und ein "Brake-by-Wire"-Prinzip einzuführen.

Ein nach diesem Prinzip arbeitendes Bremssystem für Fahrzeuge ist durch die US-A-5,230,549 bekannt geworden.

Derartige Bremsanlagen vom "Brake-by-Wire"-Prinzip weisen ein von der Bremsanlage mechanisch entkoppeltes Bremspedal auf, das jedoch durch entsprechende mechanische Mittel mit Rückstellmechanismen, wie Federn oder dgl., hinsichtlich seiner Betätigbarkeit einem konventionellen mechanisch gekoppelten Bremspedal nachgebildet ist, so daß der Fahrer beim Bremsen in gewohnter Weise das Bremspedal betätigt. Dem Bremspedal ist eine Sensorik mit Datenaufbereitung zugeordnet, das sogenannte Pedal-Modul, das die Bremspedal-Betätigung meßtechnisch erfaßt, typischerweise die vom Fahrer aufgebrachte Fuß-Betätigungskraft und/oder den vom Bremspedal zurückgelegten weg, um daraus Signale für die Ableitung des sogenannten Bremswunsches des Fahrers zu gewinnen. Die Auswertung des Bremswunschsignals erfolgt in einer nachgeschalteten, zentralen Auswerteeinheit, die mindestens einen Mikro-prozessor aufweist, deren Ausgangssignale insbesondere auf die Bremsmodule an den Rädern und auf die Bremslichter aufgeschaltet sind. Die Bremsmodule an den Rädern weisen dabei typischerweise eigene, die Bremsbetätigung durchführende Regelkreise auf, für die das Bremswunschsignal den Sollwert vorgibt. Dabei kann auch das Pedal-Modul einen Mikroprozessor zur Datenaufbereitung aufweisen. Die Sensordaten können auch direkt auf einen Bus geschaltet werden, wobei die Bremswunscherzeugung im Zentralrechner bzw. in Radmodulrechnern erfolgt.

Eine zentrale Frage bei diesen doch sehr sicherheitskritischen "Brake-by-Wire"-Systemen ist diejenige nach der Fehlererkennung und nach dem Verhalten dieses Systems im Fehlerfall.

Da die Bremswirkung der Bremsanlage abhängig vom ermittelten Bremswunsch ist, darf im Fehlerfall der Bremswunscherfassung, insbesondere im Fehlerfall der Pedalsensorik oder der elektronischen Einheit selbst, keine ungewollte Bremswirkung eingestellt werden. Maßnahmen zur Fehlererkennung oder zur Steuerung der Bremsanlage im Fehlerfall werden in der US-5,230,549 nicht beschrieben.

Durch die DE 195 10 525 A1 (= EP 08 149 81 A 1) sind Maßnahmen bekannt geworden, die Bremsanlagen vom "Brakeby-Wire"-Typ mit Blick auf mögliche Fehlerzustände im Bereich der Bremswunscherfassung verbessern. Die zentrale Maßnahme besteht darin, daß der Bremswunsch des Fahrers jeweils unabhängig voneinander durch wenigstens zwei Meßeinrichtungen erfaßt wird, die unterschiedliche, die Bremspedalbetätigung charakterisierende Größen mit unterschiedlichen Meßprinzipien (Diversität) ermitteln, wobei die so gebildeten Bremswunschgrößen miteinander verglichen werden und bei unzulässigen Abweichungen ein Fehlerzustand erkannt wird.

Wenngleich diese bekannten, auf diversitäre Realisierung ausgerichteten Maßnahmen auch das Erkennen bestimmter Fehler ermöglichen, so ist die Palette dererkennbaren Fehlerarten doch beschränkt, wie auch die Schnelligkeit der Fehlererkennbarkeit. So benötigt das bekannte System einen hohen Aufwand, um überhaupt mechanische Fehler im Bremspedalmodul von Sensorik-Fehlern unterscheiden zu können, bzw. es können keine eindeutigen Aussagen über die Fehlerlokalisierung getroffen werden. Dies kann im schlimmsten Fall zu einem inkonsistenten Zustand und Totalausfall der Bremsanlage führen.

Der Erfindung liegt die Aufgabe zugrunde, das eingangs bezeichnete Verfahren so zu führen bzw. die eingangs bezeichnete Vorrichtung so auszubilden, daß eine schnelle Bremswunschermittlung mit einer Überwachungsfunktionalität möglich ist, die mehr Fehlerarten abdeckt und schneller erkennt als andere bisher bekannte Verfahren.

Die Lösung dieser Aufgabe gelingt in bezug auf das Verfahren gemäß der Erfindung dadurch, daß die Meßeinrichtungen dieselbe die Bremspedalbetätigung charakterisierende Größe zur Bestimmung des Bremswunsches ermitteln, und eine weitere Meßgröße für die Überwachung der Pedalmechanik und der Pedalsensorik abgeleitet und mit dem Bremswunschsignal in.der elektronischen Auswerteeinheit verglichen wird.

Hinsichtlich der Vorrichtung zur Steuerung oder Regelung der Bremsanlage eines Fahrzeuges nach dem Brake-by-Wire-Prinzip, die ein Bremspedal mit einer Pedalmechanik und eine Pedalsensorik, mindestens eine elektronisch Auswerteeinheit und Radbremsmodule aufweist, mit:
- einer Pedalerfassungseinheit zum Erfassen der Bremspedalbetätigung durch den Fahrer, die aus wenigstens zwei Meßeinrichtungen aufgebaut ist, die die Bremspedalbetätigung charakterisierende Größen erfassen,
- einer Auswerteeinheit, welche den Bremswunsch des Fahrers aus den Signalen der Meßeinrichtung ermittelt,
gelingt die Lösung der Aufgabe erfindungsgemäß dadurch, daß die Meßeinrichtungen so ausgebildet sind, daß sie dieselbe die Bremspedalbetätigung charakterisierende Größe zur Bestimmung des Bremswunsches durch die Auswerteeinheit ermitteln und daß eine weitere Meßeinrichtung für die Überwachung der Pedalmechanik und der Pedalsensorik vorgesehen ist, deren Meßsignal mit dem Bremswunschsignal in der elektronischen Auswerteeinheit verglichen wird.

Durch die Maßnahme nach der Erfindung ist eine schnelle Bremswunschermittlung möglich, mit einer Überwachungsfunktionalität, die mehr Fehlerarten abdeckt und schneller erkennt als das bekannte Verfahren. Dadurch wird eine Erhöhung der Sicherheit, der Zuverlässigkeit und Verfügbarkeit erreicht. Aufgrund der Bremswunscherfassung einer identischen physikalischen Größe (z.B. der Pedalbetätigungskraft), mit zwei Sensoren, kann der Überwachungsaufwand des Pedalmoduls minimiert werden.

Diese Vorteile treten besonders dann deutlich hervor, wenn gemäß einer Weiterbildung der Erfindung beide Meßeinrichtung durch gleiche Sensoren gebildet werden.

Vorzugsweise erfassen die beiden Meßeinrichtungen, aus denen der Bremswunsch ermittelt wird, die Fahrerfußkraft, ausgedrückt durch die Pedalbetätigungskraft. Die Erfassung der Fahrerfußkraft erfolgt vorzugsweise nur dann, wenn der Fehler: "klemmendes Pedal" von der Auswerteelektronik erkannt werden soll. Falls durch ein geschicktes konstruktives Design dieser Fehlerfall eine Ausfallwahrscheinlichkeit kleiner als die Ausfallwahrscheinlichkeit der Sensorik, der Auswerteelektronik oder des Fehlers "abbrechendes Pedal" hat, so können auch zwei Weg- oder Winkelsensoren oder alternativ ein Weg- und ein Winkelsensor zur Erfassung des Bremswunsches herangezogen werden.

Die weitere Überwachungs-Meßeinrichtung erfaßt vorzugsweise den Pedalweg "s" oder die Pedalwinkelstellung "α" und braucht keine Kraft F zu ermitteln. Die Erfassung der Kraft F als Überwachungsgröße kommt allenfalls für Komfortzwecke in Betracht, da sie gewisse systemtypische Nachteile mit sich führt.

Weitere Ausgestaltungen und Vorteile der Erfindung ergeben sich anhand der Beschreibung von in den Zeichnungen dargestellten Ausführungsbeispielen.

Es zeigen:
- Figur 1: ein Blockschaltbild einer Steuerung bzw. Regelung der Bremsanlage eines Fahrzeuges nach dem Brake-by-Wire-Prinzip einschließlich der erfindungsgemäß ausgebildeten Pedalsensoren,
- Figur 2: ein Flußdiagramm für die Basisberechnung des Bremswunsches, der Bremskraft und der Fehlerlokalisierung gemäß einer ersten Ausführungsform,
- Figur 2A: eine Teilvariante des Flußdiagrammes nach Figur 2, bei der der Gradient der Sensorsignale mit in die Berechnung einbezogen wird,
- Figur 2B: eine Teilalternative der Figur 2 bei der Bildung des Bremswunschsignales bei defekten Sensoren für die Bremswunschermittlung,
- Figur 2C: eine Ergänzung zur Figur 2, die ein drittes Sensorsignal zur Erkennung eines Fehlers im Überwachungssensor mit einbezieht,
- Figur 3: ein Flußdiagramm zur Basisberechnung des Bremswunsches der Bremskraft und der Fehlerlokalisierung gemäß einer zweiten Möglichkeit unter Einbeziehung der Gradientenberechnung der Sensorsignale,
- Figur 3A: eine Teilalternative analog der Figur 2B hinsichtlich der Auswahl des den Bremswunsch bildenden Sensorsignals im Falle eines Defektes eines der beiden Bremswunsch-Sensoren,
- Figur 3B: eine Ergänzung des Flußdiagrammes nach Figur 3 analog der Figur 2C hinsichtlich der Einbeziehung eines dritten Signales zur Erkennung eines Fehlers im Überwachungssensor, und
- Figur 4: ein Flußdiagramm für eine erweiterte Signalverarbeitung mit Statusmeldungen einschließlich der Gesamtbremskraftberechnung.

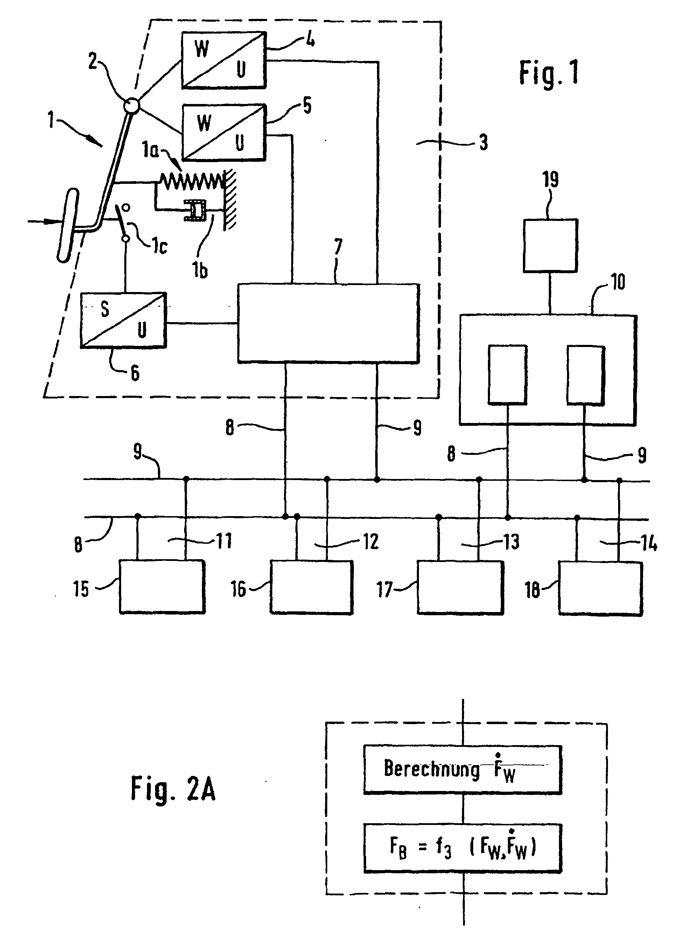

Die Figur 1 zeigt in einem Blockschaltbild den prinzipiellen Aufbau einer Bremsanlage nach dem "Brake-by-Wire-"Prinzip. Die Bremsanlage weist zunächst ein Bremspedal 1 mit einer Anlenkung 2 auf, das mit einer ansich bekannten Pedalmechanik versehen ist, die das Verhalten eines konventionellen, mechanisch mit der Bremsanlage gekoppelten Bremspedals nachbildet. Diese Pedalmechanik kann ein mechanisches Element mit Rückstellmechanismus, z.B. einer Feder 1 a, sein. Auch sind hydraulische oder pneumatische, nachbildende Anordnungen 1 b denkbar. Charakteristisch für die Pedalbetätigung ist dabei die vom Fahrer aufgebrachte Fußkraft, die sich in einer entsprechenden Pedalbetätigungskraft ausdrückt, und/oder der Fußweg, der sich in einem entsprechenden Pedalweg S bzw. in einem Pedalwinkel W wiederspiegelt. Diese nachbildenden Anordnungen 1 a, 1 b können einfach vorhanden oder zur Erhöhung der Sicherheit doppelt ausgelegt sein (Redundanz). Die für die Pedalbewegung charakteristischen Größen S bzw. W werden durch einen Pedalmodul 3 erfaßt, der im Ausführungbeispiel drei Meßeinrichtungen 4, 5, 6 mit entsprechenden Sensoren und eine Meßdatenaufbereitung 7 aufweist. Am Ausgang des Pedalmoduls 3 stehen auf den, aus Sicherheitsgründen doppelt ausgeführten, Datenverbindungen 8, 9 die aufbereiteten Sensorsignale oder der aus diesen Signalen bereits ermittelte Bremswunsch F_{w}, falls die Meßdatenaufbereitung 7 einen Rechner enthält zur Verfügung. Im ersten Fall werden über die Verbindungen 8, 9 die aufgrund der Pedalbetätigung erzeugten, aufbereiteten Sensorsignale an eine Auswerteeinheit 10, die typischerweise ein Rechnersystem mit zwei Rechnern 10 a, b ist, übertragen. Das Rechnersystem ermittelt aus den aufbereiteten Sensorsignalen den Fahrerbremswunsch F_{w}. Dieser Bremswunsch stellt ein Maß für die erwünschte Bremswirkung der Bremsanlage dar und repräsentiert im bevorzugten Ausführungsbeispiel die Bremskraft. Neben der Bremskraft können auch andere Größen, z.B. eine das Bremsmoment, den Bremsdruck, die Fahrzeugverzögerung, die Bremsleistung, usw. repräsentierendeGrößen in der Meßdatenaufbereitung 7 aus den Sensorsignalen ermittelt und der Auswerteeinheit 10 zur Verfügung gestellt werden.

Die Auswerteeinheit 10 setzt den ermittelten Bremswunsch unter Berücksichtigung der gewünschten Bremskraftverteilung, des Belagverschleißes, den Achslasten, usw. in Sollwerte für die Radbremsen um. Diese Sollwerte repräsentieren im bevorzugten Ausführungsbeispiel den an den Radbremsen einzustellenden Bremsdruck, in anderen vorteilhaften Ausführungsbeispielen die einzustellende Bremskraft, das einzustellende Bremsmoment, usw.. Über die redundant vorhandenen Leitungen 11, 12, 13 und 14 gibt die Auswerteeinheit 10 im bevorzugten Ausführungsbeispiel individuelle Sollwerte bzw. Ansteuersignale zur Einstellung dieser Sollwerte an die Radbremsmodule 15, 16, 17 und 18 ab, die selbst ebenfalls Rechner enthalten, damit bei einem Ausfall des Zentralrechners 10 aus den Sensorsignalen der Bremswunsch ermittelbar ist.

An die Auswerteeinheit 10 ist ferner eine Anzeige/bzw. Warneinrichtung 19 angeschlossen, die beispielsweise dem Fahrer einen Fehlerzustand im Bereich der Bremsanlage anzeigt.

Die Anordnung nach Figur 1 ist eine besondere Ausführungsform. Es ist auch denkbar, beispielsweise die Meßdatenaufbereitungs-Stufe 7 mit der elektronischen Auswertestufe 10 zu kombinieren.

Eine besondere Bedeutung für die Fehlersicherheit der Bremsanlage kommt den Meßeinrichtungen 4, 5 und 6 zu, die die Bremspedalbetätigung erfassen. Erfindungsgemäß werden zur Ermittlung des Bremswunsches zwei gleiche Meßeinrichtungen 4 und 5 vorgesehen, die dieselbe, die Bremspedalbetätigung charakterisierende Größe ermitteln, und vorzugsweise auch gleiche Sensoren aufweisen. Vorzugsweise erfassen beide Meßeinrichtungen eine die Fahrerfußkraft charakterisierende Größe, z.B. die Pedalbetätigungskraft. In einem weiteren, dem dargestellten Ausführungsbeispiel, kann zweimal ein Drehwinkel gemessen werden, was insbesondere bei solchen Bremspedalen, die eine Drehbewegung bei der Betätigung beinhalten, von Bedeutung ist. Bei translatorisch bewegten Pedalen wird der Pedalweg s erfaßt.

Aus den Signalen der Meßeinrichtungen 4 und 5 wird entweder in der Meßdatenaufbereitungsstufe 7 oder im Zentralrechner 10 der Bremswunsch, d.h. eine die Bremswirkung charakterisierende Größe, z.B. in Form einer aufzubringenden Gesamtbremskraft, für das Fahrzeug berechnet, und, wie bereits dargestellt, zur Ansteuerung der elektrischen Bremsanlage des Fahrzeuges weitergeleitet.

Eine dritte Größe wird in der Meßeinrichtung 6 erfaßt, diefür die Überwachung der Pedalmechanik und Pedalsensorik des Bremspedalmoduls 3 eingesetzt wird, die eine andere physikalische Größe als die beiden Bremswunschsensoren 4 und 5 bei der Pedalbetätigung durch den Fahrer erfaßt. Diese dritte Meßeinrichtung 6 stellt letztlich einen Überwachungssensor dar; wenn beispielsweise die Meßeinrichtungen 4 und 5 die Pedalbetätigungskraft ermitteln, kann die Meßeinrichtung 6 mittels eines Wegsensors den Pedalweg erfassen, beispielsweise durch einen in der Anlenkung 2 des Bremspedals integrierten digitalen Winkelgeber, der kodierte, die jeweilige Stellung repräsentierende Signale abgibt, oder, wie in Fig. 1 dargestellt, den Weggeber 1 c.

Durch diese Maßnahmen wird eine Erhöhung der Sicherheit, Zuverlässigkeit und Verfügbarkeit der Bremsanlage erreicht. Aufgrund der Bremswunscherfassung einer identischen physikalischen Größe, z.B. der Fahrerfußkraft, oder des Pedalwinkels mit zwei gleichen Sensoren, kann der Überwachungsaufwand des Pedalmoduls durch eine geschickte Wahl der Sensorik minimiert werden. Bei der erfindungsgemäßen Anordnung ist der Aufwand, um mechanische Fehlervon Sensorfehlern unterscheiden zu können, verhältnismäßig gering, bzw. es können auch eindeutige Aussagen über die Fehlerlokalisierung getroffen werden, so daß es nicht zu inkonsistenten Zuständen und einem Totalausfall der Bremsanlage kommen kann.

Die Reduzierung des Aufwandes bei der Fehlererkennung und Lokalisierung gegenüber den bekannten Prinzipien wird durch folgende Überlegungen deutlich. Werden beispielsweise die Meßeinrichtungen 4 und 5 durch zwei Kraft- oder Winkelsensoren ausgebildet, spielen zunächst Veränderungen in der Pedalmechanik keine Rolle, da sie keine Abweichung der Meßwerte beinhalten. Solange die Mechanik in Ordnung ist, liefern beide Sensoren das gleiche Signal; ist sie defekt, dann liefern beide Sensoren ebenfalls ein entsprechendes gleiches Signal. Somit kann im einfachsten Fall auf eine Überwachung der Mechanik bei diese Sensoranordnung verzichtet werden, wenn man von dem unwahrscheinlichen Fall eines Pedalbruches einmal absieht.

Weitere Vorteile der Erfindung sind:
1. Bei der Überwachung und Fehlererkennung des Pedalmoduls müssen neben Sensor- und Elektronikfehler bzw. -ausfälle auch Fehler bzw. Ausfälle in der Mechanik berücksichtig werden.
   Besonders darf z.B. ein klemmendes Pedal die Berechnung des Bremswunsches nicht beeinträchtigen. Ein klemmendes Pedal kann zwei Folgen haben: der Fahrer kann bei einer Betätigung das Pedal nicht mehr oder kaum nach vorne bewegen (es kann schon teilweise nach vorne gedrückt worden sein) oder das Pedal kommt bei Abbruch der Betätigung nicht mehr oder nicht schnell genug zurück.
   Bei der Verwendung eines Weg- oder Drehwinkelsensors in der Meßeinrichtung 6 wird jedoch weiterhin ein Weg oder Drehwinkel angezeigt werden, auch wenn der Fahrer das Pedal nicht weiter betätigt. Daraus folgt, daß der nominal zugrundeliegende Zusammenhang zwischen Pedalweg und Kraft in dieser Fehlersituation nicht mehr gegeben ist. Dadurch könnten falsche Schlüsse bei der Fehlerlokalisierung und Bremswunschberechnung gezogen werden, die zu einem inkonsistenten Verhalten des Systems führen.
   Im schlimmsten Fall würde ein ordungsgemäß arbeitender Sensor von dem System durch einen Mehrheitsentscheid nicht weiter berücksichtigt, während ein fehlerhafter Sensor als solcher nicht erkannt wird. Dies kann zu einem Totalausfall des Bremssystems führen, da kein sinnvoller Bremssollwert mehr generiert werden kann.
   Aus diesem Grunde werden vorzugsweise bei elektromechanischen Bremssystemen zwei Kraftsensoren oder Drehmomentsensoren verwendet, um in der Betätigungsmechanik weiterhin einen eindeutigen Bremswunsch generieren und eine eindeutige Überwachung gewährleisten, d.h. den Unterschied zwischen klemmendem und nichtklemmendem Pedal erkennen zu können. Bei elektrohydraulischen oder elektropneumatischen Pedalmodulen eignen sich vorzugsweise zwei Drucksensoren oder ebenfalls zwei Drehwinkelsensoren. Es ist aber auch die reziproke Sensöranordnung sinnvoll, beispielsweise zwei Drehwinkelsensoren und ein Kraftsensor.
2. Eine Fehlererkennung bei den beiden Bremswunscherfassungssensoren 4, 5 kann schnell durch einen einfachen Vergleich der Signale oder Meßwerte erfolgen. Vorzugsweise wird überprüft, ob sich beide Werte innerhalb einer vorgegebenen Toleranz befinden.
3. Eine Bremswunschberechnung reicht zunächst aus, wenn sie nur von einem Meßwert der beiden Bremswunscherfassungsensoren 5, 6 ermittelt wird.
   Der zweite Bremswunscherfassungssensor dient dann zunächst nur der Überwachung und Bestätigung des ersten Bremswunscherfassungssensors. Aus diesem Grund könnte der zweite Bremswunscherfassungssensor eine geringere Genauigkeit und Auflösung aufweisen und damit eine kostengünstigere Ausführung als der erste Bremswunscherfassungssensor darstellen.
4. Falls bei den beiden Bremswunscherfassungssensoren 4, 5 eine unzulässige Abweichung der Meßwerte aufweisen, wird der Überwachungssensor verwendet, um den fehlerhaften Sensor duch einen Mehrheitsentscheid lokalisieren zu können. Dies kann dadurch erfolgen, daß der Meßwert des ersten Bremswunscherfassungssensors zunächst mit dem Meßwert des Überwachungssensormeßwertes verglichen wird.
   Befinden sich beide innerhalb einer vorgegebenen Toleranz, so wird der zweite Bremswunscherfassungssensor als fehlerhaft lokalisiert. Falls nicht, so ist es der erste Bremswunscherfassungssensor.
   Alternativ werden die Abweichungen von beiden Bremswunscherfassungssensoren 4, 5 mit dem Überwachungssensor 6 ermittelt und miteinander verglichen. Der Bremswunscherfassungssensor mit der größeren Abweichung zum Überwachungssensor wird als fehlerhaft lokalisiert.
   Alternativ werden die Bremssollwerte von allen drei Sensoren 4, 5, 6 berechnet und miteinander verglichen (jeweils ein Bremswunscherfassungssensor mit dem Überwachungssensor). Der Bremswunscherfassungssensor, dessen Bremswunsch die größere Abweichung zum Bremswunsch des Überwachungssensors aufweist, wird als fehlerhaft lokalisiert.
   Wenn der Überwachungssensor 6 zur Lokalisierung eines Fehlers im Sensor 4 oder Sensor 5 eingesetzt wird, muß vorher sichergestellt sein, daß der Überwachungssensor einen fehlerfreien Sensorwert liefert. Zu diesem Zweck muß, falls der Vergleich von Sensor 4 gegen Sensor 5 keinen Fehler anzeigt, der aus Sensor 4 oder 5 oder beiden berechnete Bremswunsch verglichen werden mit dem 1 aus dem Signal des Überwachungssensors 6 berechneten Bremswunsch. Hierbei wird die Annahme zugrundegelegt, daß während des Betriebes (außer bei einem Spannunsversorgungs-Ausfall) keine Doppelfehler auftreten, d.h. ein Bremswunscherfassungssensor und der Überwachungssensor oder die beiden Bremswunscherfassungssensoren haben nicht gleichzeitig und unabängig voneinander einen Fehler.
   Ergibt sich keine signifikante Abweichung, so kann der Überwachungssensor 6 zur Fehlerlokalisierung eingsetzt werden. Ergibt sich ein Fehler, so ist entweder der Überwachungssensor oder die Fehlermechanik defekt. In diesem Fall wird der Sensor 6 weggeschaltet, da dies bei beiden Fehlerfällen dieselbe Auswirkung hat.
5. Eine Bremswunschgenerierung, Überwachung und Fehlerlokalisierung, die auf der Verwendung von, bevorzugt zwei Kraftsensoren als Bremswunscherfassungssensoren 4, 5 und einem Sensor 6 (z.B. Wegsensor), der nur zur Überwachung basiert, ist unempfindlich gegenüber mechanischen Veränderungen des Pedals (z.B. Dämpfung, Hysterese, Fußkraft-Fußweg-Kennlinien). Bei mechanischer Veränderung kann der Fahrer selbst diese Veränderung ausgleichen, indem er seine Fußkraft bzw. seinen Fußweg entsprechend an die Veränderungen der Mechanik anpassen kann. Wichtig ist nur, daß das Pedalmodul bei allen möglichen Fehlerfällen so lange wie möglich einen Bremssollwert entsprechend dem Fahrerbremswunsch berechnen kann. Dies wird insbesondere durch die beiden Bremswunscherfassungssensoren, die die gleiche Art der Meßgröße (z.B. Kraft oder Drehmoment oder Weg) messen, verwirklicht. Auch bei einer veränderten Mechanik (klemmendes/nicht-klemmendes Pedal) kann weiterhin sofort ein Bremswunsch generiert werden, da die beiden Sensoren keine Abweichungen zeigen werden, wenn beide ordnungsgemäß funktionieren.
   Würde, wie im bekannten Fall, ein Kraftsensor und ein Wegsensor als Bremswunscherfassungssensoren eingesetzt werden, so könnten bei einer veränderten Mechanik die Bremssollwerte nicht sofort berechnet werden, da zunächst festgestellt werden müßte, ob die Sensorik oder die Mechanik einen Fehler aufweist. Dies macht das System unnötig komplex und dadurch fehleranfälliger.
   Die Sensoren, die die für Fahrerfußkraft charakteristische Größe messen und der Überwachungssensor, falls er die gleiche Größe mißt, sind bevorzugt im Bremspedal 1 angeordnet. Dadurch ist auch bei einem Ausfall der Pedalmechanik (z.B. klemmendes Pedal) aus den Sensoren weiterhin eindeutig der Bremswunsch ermittelbar. Eine Unterscheidung (Fehlerlokalisierung) zwischen Sensorfehler und mechanischen Fehlern ist dann nicht notwendig, da sich mechanische Fehler nicht auf die Sensorsignale auswirken, abgesehen von dem Fall des Pedalbruches.
6. Es kann davon ausgegangen werden, daß der Fahrer selbst in der Lage ist, eine für ihn unangenehme Veränderung der Mechanik zu erkennen und entsprechend reparieren zu lassen. Eine Überwachung der Mechanik wird dadurch nicht mehr zwingend notwendig.
7. Werden die beiden Bremswunscherfassungssensoren 4,5 mit der gleichen Genauigkeit verwendet, so kann der Überwachungssensor 6 eine geringere Genauigkeit aufweisen, da er nur der Fehlerlokalisierung dient.
8. werden hingegen zwei Bremswunscherfassungssensoren 4, 5 mit unterschiedlicher Genauigkeit verwendet, so wird vorzugsweise ein Sensor 6 mit einer entsprechenden Genauigkeit wie der bessere von beiden Bremswunscherfassungssensoren verwendet.

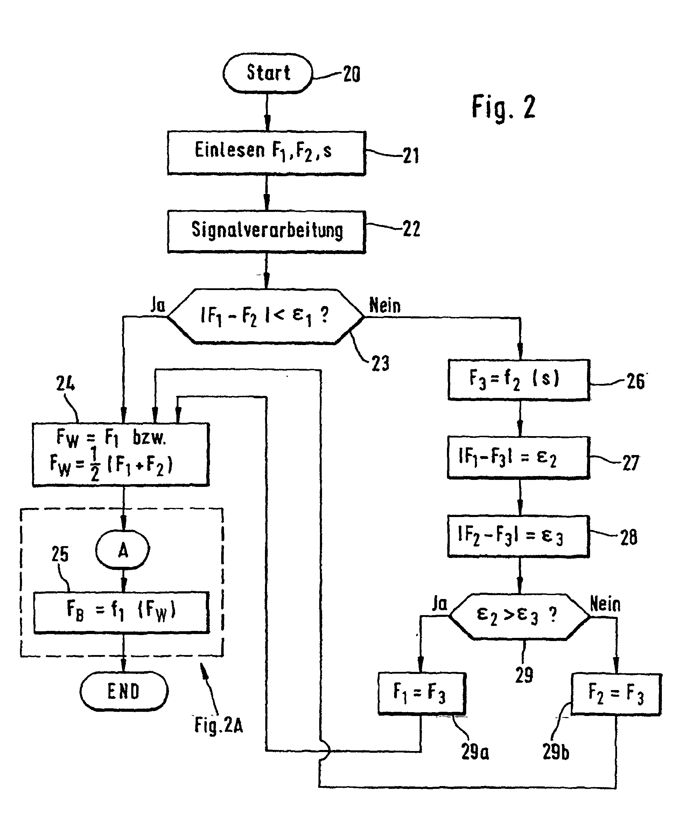

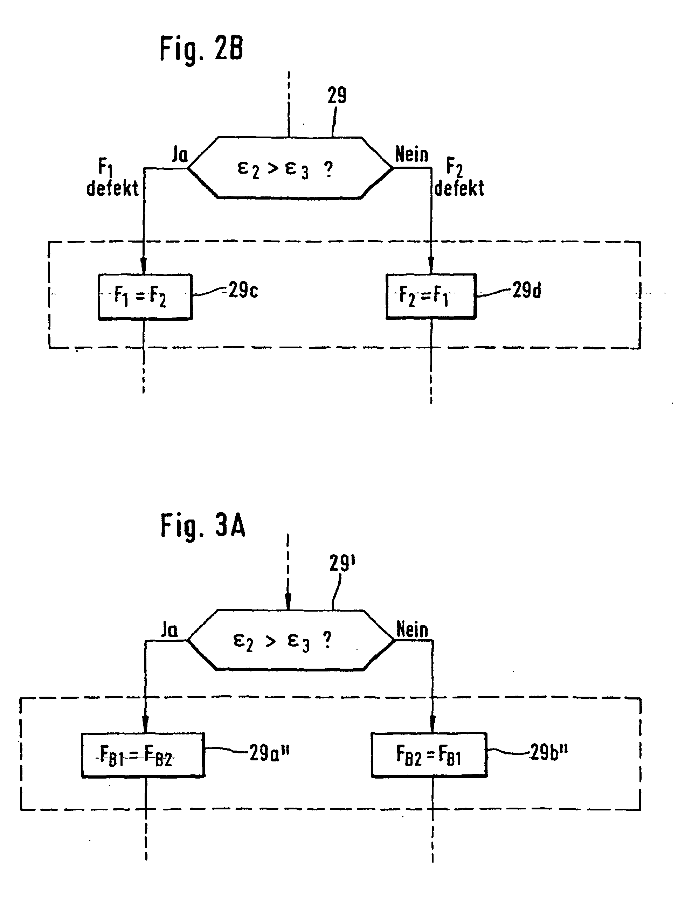

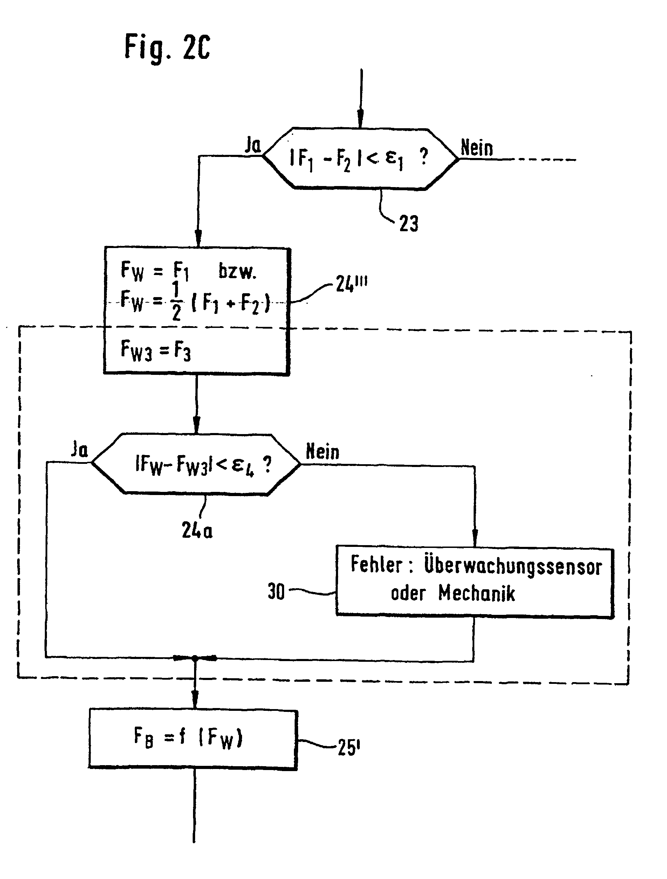

Die Figuren 2 bis 4 mit weiteren Unterfiguren zeigen Flußdiagramme zur Fehlererkennung und zur Berechnung des Bremswunsches und der Bremskraft entsprechend den vorstehenden Ausführungen.

In den Flußdiagrammen bezeichnet jeweils F1 den ersten Bremswunsch-Erfassungs-Sensorwert der Meßeinrichtung 4 (z.B. Kraft 1) und F2 den zweiten Bremswunsch-Erfassungs-Sensorwert der Meßeinrichtung 5 (z.B. Kraft 2). Mit s wird der Überwachungswert (z.B. Weg) der dritten Meßeinrichtung 6 bezeichnet. Mit ε werden vorgegebene Schranken definiert. F_{B} stellt die Gesamtbremskraft für das gesamte Fahrzeug dar und wird als Basis für eine Bremskraftverteilung der einzelnen Radbremsmodule verwendet.

Die Funktionen f1, f2 usw. sind funktionale Zusammenhänge, mit denen die Bremskräfte aus den Sensorsignalen bzw. aus dem Fahrerbremswunsch F_{w} bestimmt werden. Im einfachsten Fall besteht ein linearer Zusammenhang bei den Funktionen f1, f2 usw. zwischen Eingangs- und Ausgangsgröße.

Mit F_{w} wird der Fahrerbremswunsch bezeichnet, der sich aus den Sensorsignalen ergibt.

Die Figur 2 zeigt die Basisberechnung des Bremswunsches, der Bremskraft und der Fehlerlokalisierung gemäß einer ersten Möglichkeit. Nach dem Start 20 des in Figur 2 dargestellten Programmteiles werden im ersten Schritt 21 die Signale F1, F2 der Meßeinrichtungen 4 und 5 (Figur 1) sowie das Signal s der Meßeinrichtung 6 eingelesen. Im Schritt 22 erfolgt dann eine übliche Signalverarbeitung, um die Signale in den nachfolgenden Schritten vergleichbar zu machen. Im Schritt 23, der einen Entscheidungsschritt darstellt, wird der Betrag der Differenz zwischen den Signalen F1 und F2 mit einer ersten Schranke verglichen. Ist die Differenz kleiner als die vorgegebene erste Schranke, d.h., liegen insoweit keine Fehler vor, dann wird über den Ja-Ausgang im Schritt24der Bremswunsch F_{w} und im Schritt 25 die Gesamtbremskraft F_{B} ermittelt.

Wenn der Programmschritt 23 dagegen ergibt, daß die Differenz größer als die erste Schranke ist, d. h. einer der Sensoren der Meßeinrichtungen 4, 5 defekt ist, dann wird im Schritt 26 das Signal F3, das eine Funktion des Pedalweges s ist, als Entscheidungshilfe herangezogen, indem dieses Signal in den Stufen 27 und 28 jeweils mit den Größen F1 und F2, d.h. mit den Ausgangssignalen der Meßeinrichtungen 4 und 5 verglichen wird. Je nachdem, welche Differenz größer ist, d. h. ob F1 oder F2 fehlerbehaftet ist, was im Schritt 29 ermittelt wird, wird der eine oder andere Wert F1 bzw. F2 der Meßeinrichtungen 4 bzw. 5 im Programmschritt 24 der Berechnung des Bremswunsches des Fahrers zugrundegelegt. Die Programmschritte 26 bis 29 stellen letztlich sicher, daß, obwohl ein Fehler in einer der beiden Meßeinrichtungen 4 oder 5 enthalten ist, der intakte Wert durch Vergleich mit dem Überwachungssensor 6 zur Bildung des Bremswunsches herangezogen wird.

Der Block 25 in Figur2 kann durch den in Figur 2A dargestellten Block ersetzt werden, wenn die Gradienten der Sensorsignale für die Berechnung eines dynamischen Bremswunsches F_{w} mitbestimmt werden, d. h. gemäß dem Block nach Figur 2A erfolgt eine Einbeziehung der Gradientenberechnung des Sensorsignale. Dadurch kann besser auf dynamische Veränderungen der Signale eingegangen werden. Besonders bei Panikbremsungen kann ein starker Gradientenanstieg als Unterstützung bzw. als Erhöhung der Bremskraft_des_Fahrzeuges mitverwendet werden und unterstützt den Fahrer dadurch, um kürzere bzw. optimale Bremswege zu erzielen.

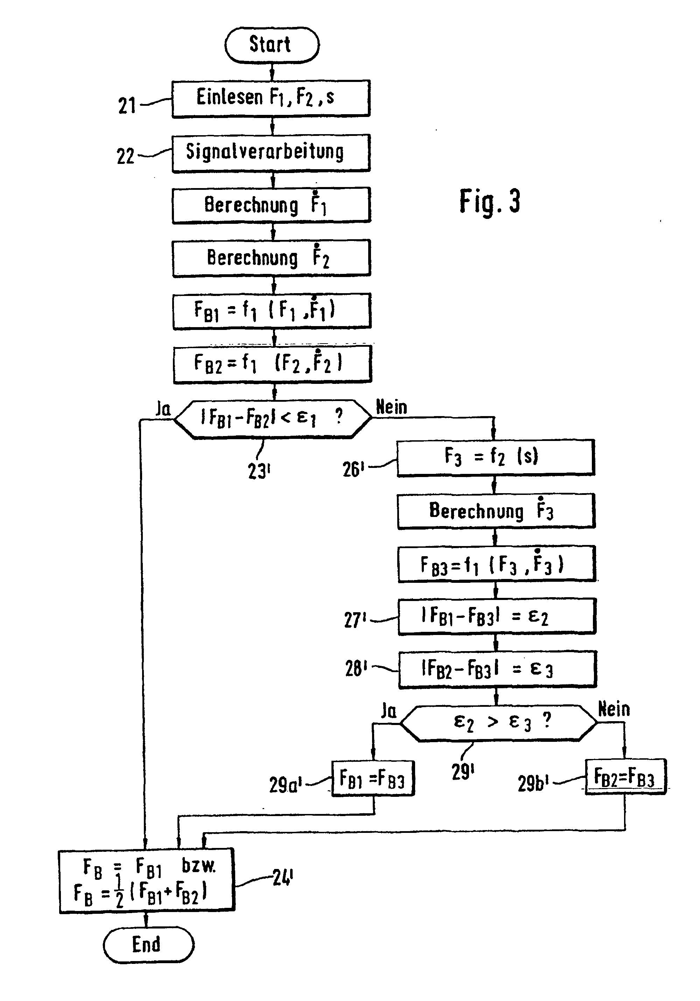

Die Figur 3 zeigt ein weiteres Flußdiagramm für die Basisberechnung des Bremswunsches, der Bremskraft und der Fehlerlokalisierung gemäß einer zweiten Möglichkeit, wobei bei dieser Möglichkeit durchgehend die Einbeziehung der Gradientenberechnung der Sensorsignale erfolgt. Der Gradient wird dabei durch Bildung der Differenz zwischen dem aktuellen und dem Meßwert des vorherigen Programmdurchlaufes ermittelt. Die Berechnung der Bremskraft F_{B} in Verbindung mit der fallweisen Fehlerbetrachtung wird unmittelbar aus dem Flußdiagramm bzw. in Verbindung mit der Beschreibung zur Fig. 2 (gleichartige Kästchen haben dieselbe Bezugsziffer) deutlich.

Alternativ zur Verwendung des Überwachungssensors 6 mit dem Signal F3 zur Bremswunschermittlung im Falle eines Fehlers der Sensoren 4 (F1) oder 5 (F2), d.h. führt die Entscheidung in dem Programmschritt 23, zu einem Nein, kann auch nur der noch intakte Bremswunsch-Erfassungs-Sensor verwendet werden, d.h. entweder F1 oder F2. Die entsprechende alternative Darstellung des Ablaufplanes hinsichtlich der Programmschritte 29, 29a und 29b in Figur 2 ist in Figur 2B dargestellt, während der alternative Ablaufplan für die Möglichkeit nach Figur 3 in der Figur 3A dargestellt ist.

Die Figur 2C zeigt eine Ergänzung des Flußdiagrammes nach Figur 2 hinsichtlich des Schrittes 24 zur Bestimmung des Bremswunsches F_{w}, wobei in dem neugebildeten Programmschritt 24''', der aus dem Sensor 4 (F1) oder 5 (F2) oder beiden berechnetem Bremswunsch verglichen wird, mit dem aus dem Überwachungssensor (F3) berechneten Bremswunsch. Ergibt sich dabei gemäß dem Entscheidungsschritt24a eine Differenz, die die Schwelle ε4 überschreitet, so ist entweder der Überwachungssensor oder die Pedalmechanik defekt. Auf die Ausführungen zu dem Vorteil Nr. 5 wird insoweit ergänzend Bezug genommen.

Eine entsprechende Ergänzung des Flußdiagrammes für die in Figur3 dargestellte Möglichkeit zeigt die Figur 3C, zu der im Hinblick auf die ausführliche Beschreibung der Figur 2C keine weiteren Ausführungen mehr notwendig sind.

Bei einem Fehler im Überwachungssensor 6 kann jeweils eine entsprechende Fehleranzeige in der Stufe 30 erfolgen, z.B. durch eine gelbe Lampe, oder der Fehlerzustand kann auch in einem Fehlerspeicher gespeichert werden. Tritt dann als weiterer Fehler eine Abweichung zwischen den Sensoren 4 und 5 auf, so ist keine Fehlerlokalisierung mehr möglich. Um trotzdem einen Bremswunsch zu berechnen, ist es sinnvoll, aus beiden Sensoren, z.B. über eine Mittelwertbildung, den Bremswunsch zu berechnen. Damit ist sichergestellt, daß bei einem beliebigen Fehler, wenn auch mit geänderter Skalierung und Offset, ein in der Tendenz richtiger Bremswunsch berechnet wird, d.h. das Fahrzeug dennoch bremsfähig ist.

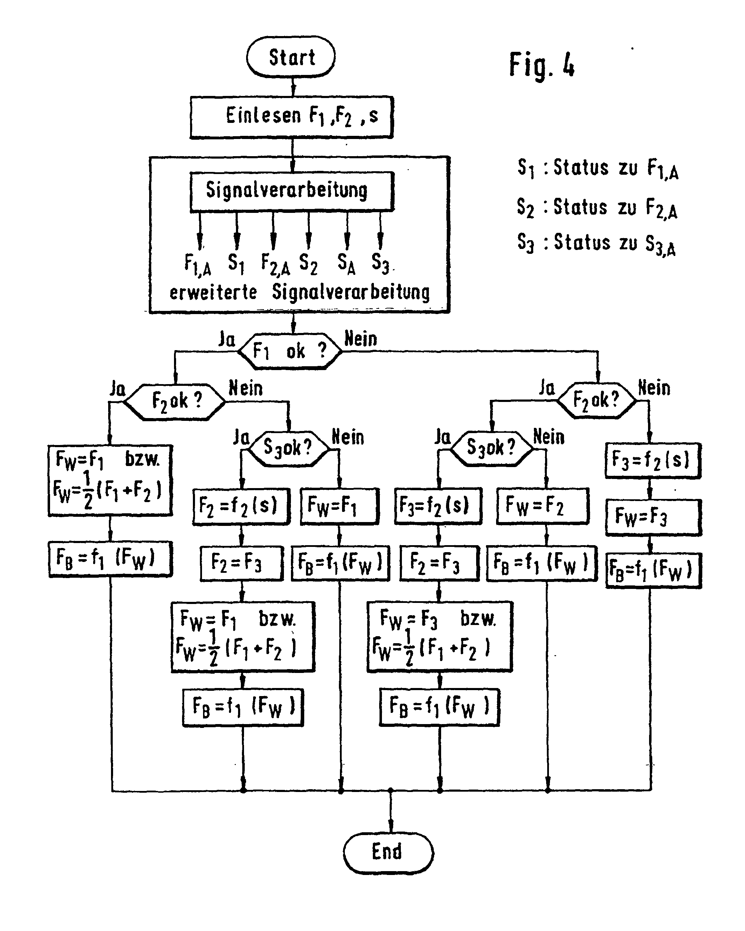

Als weitere Ergänzung werden in der Signalvorverarbeitung Statusmeldungen aller Sensoren mitbestimmt. Vorzugsweise werden Pegelstände, Fehlerzähler, Ausreißer und Signalabweichungen ermittelt. Als Ergebnis kommt zu jedem Sensorwert ein Status hinzu, der angibt, ob der entsprechende Sensor ordnungsgemäß arbeitet (ok) oder nicht. In Figur 4 ist das Flußdiagramm zur Berechnung des Bremswunsches, der Bremskraft und der Fehlerlokalisierung dargestellt, wenn Statusmeldungen über die Sensorsignale mitverwendet werden können. Dieses Flußdiagramm ist aufgrund des Textes in den Arbeits-/ bzw. Entscheidungskästchen selbsterklärend.

Werden im Rahmen einer redundanten Energieversorgung bei Ausfall einer Energieversorgung zwei Sensoren nicht mehr mit Spannung versorgt, so kann nur noch der Sensor ausgewertet werden, der die Spannung von der intakten zweiten Spannungsversorgung erhält. In diesem Fall wird keine Fehlererkennung mehr bei den Sensoren ohne Spannungsversorgung durchgeführt und nur noch der verbleibende Sensor ausgewertet. Aus diesem Grund muß eine Statusmeldung über den Zustand der Energieversorgungen mit in die Bremswunschberechnung und Überwachung einfließen.

Die Ansteuerung der Bremslichter erfolgt vorzugsweise durch das Sensorsignal, mit dem der Bremswunsch bzw. Bremskraft berechnet wird, damit auch bei einem Ausfall eines Sensors weiterhin die Bremslichter aktiviert werden können. Dies kommt besonders dann zum Tragen, wenn die Ansteuerung der Bremslichter nur an einem einzigen Sensor hängen würde, der ja ausfallen kann, obwohl durch die fehlertolerante Sensorik des Pedals weiterhin gebremst werden kann.

## Patentansprüche

1. Verfahren zur Steuerung oder Regelung derBremsanlage eines Fahrzeuges nach dem Brake-by-Wire-Prinzip, die ein Bremspedal (1) mit einer Pedalmechanik (1a, 1b) und einer Pedalsensorik (4,5,6,7), eine elektronische Auswerteeinheit (10) und Radbremsmodule (15,16,17,18) aufweist, mit den Schritten:
- Erfassen der Bremspedalbetätigung durch den Fahrer durch wenigstens zwei Meßeinrichtungen (4,5), die die Bremspedalbetätigung charakterisierende Größen ermitteln,
- Ermitteln des Bremswunsches des Fahrers der ein halz für die erwünschte Bremswirkung der Bremsanlage darstellt, aus den Signalen der Meßeinrichtungen (4,5) in der elektronischen Auswerteeinheit (10),
**dadurch gekennzeichnet,**
**daß** die Meßeinrichtungen (4,5) dieselbe die Bremspedalbetätigung charakterisierende Größe zur Bestimmung des Bremswunsches ermitteln, und daß eine dritte Meßeinrichtung (6) vorgesehen ist, die eine weitere Meßgröße für die Überwachung der Pedalmechanik und der Pedalsensorik ermittelt die mit der durch die betzeinrichtungen (4,5) ermittelten, die Brems-pedalbetätigung charalterisierenden Meßgröbe nicht identisch ist und die mit dem Bremswunschsignal in der elektronischen Auswerteeinheit (10) verglichen wird, wobei wenn einer der durch die Meßeinrichtungen (4, 5) erzengten Signale fehlerhaft ist, dieses fehlerhafte Signal durch das von der dritten Meßeinrichtung (6) erzeugte Signal ersetzt wird.

2. Verfahren nach Anspruch 1, **dadurch gekennzeichnet, daß** beide Meßeinrichtungen mittels gleicher Sensoren dieselbe charakterisierende Größe messen.

3. Verfahren nach Anspruch 1 oder 2, **dadurch gekennzeichnet, daß** die charakteristische Größe die Fahrer-Fußkraft ist.

4. Verfahren nach Anspruch 3, **dadurch gekennzeichnet, daß** zur Bestimmung der Fahrer-Fußkraft die Pedalbetätigungskraft erfaßt wird.

5. Verfahren nach Anspruch 1 oder 2, **dadurch gekennzeichnet, daß** die charakteristische Größe der Verstellwinkel des Bremspedals ist.

6. Verfahren nach Anspruch 1 oder 2, **dadurch gekennzeichnet, daß** die charakteristische Größe der Pedalweg des Bremspedals ist.

7. Verfahren nach einem der Ansprüche 1 bis 6, **dadurch gekennzeichnet, daß** die weitere Meßgröβe für die Überwachung streich eine anderesti physikalische Größe als die Meßeinrichtungen, aus denen der Bremswunsch ermittelt wird, abbildet.

8. Verfahren nach Anspruch 7, **dadurch gekennzeichnet, daß** die weitere Meßgröße von dem Bremspedalweg oder dem Verstellwinkel des Bremspedals abgeleitet wird.

9. Verfahren nach einem der Ansprüche 1 bis 8, **dadurch gekennzeichnet, daß** der Bremswunsch aus dem Signal einer der beiden Bremswunsch-Meßeinrichtungen abgeleitet wird und eine Fehlererkennung durchgeführt wird, indem dieses Signal der einen Meßeinrichtung mit dem Signal der zweiten Meßeinrichtung daraufhin überprüft wird, ob beide Signale innerhalb einer vorgegebenen Toleranz liegen.

10. Verfahren nach Anspruch 9, **dadurch gekennzeichnet, daß** das die dritte Meßgröße repräsentierende Signal für den Fall, daß die beiden Bremswunsch-Meßsignale eine unzulässige Abweichung zeigen, dazu verwendet wird, um den fehlerhaften Sensor einer der beiden Bremswunsch-Meßeinrichtungen zu lokalisieren, indem vorzugsweise jedes der Bremswunsch-Meßsignale mit dem von der dritte Meßgröße abgeleiteten Überwachungssignal verglichen wird.

11. Verfahren nach einem der Ansprüche 1 bis 10, **dadurch gekennzeichnet, daß** sowohl aus den beiden Bremswunsch-Meßeinrichtungen als auch von der dritten Meßgröße jeweils ein Bremswunsch-Signal abgeleitet wird und die Bremswunsch-Signale der beiden Bremswunsch-Meßeinrichtungen jeweils mit dem Bremswunsch-Signal aus der dritten Meßgröße verglichen wird wobei diejenige Bremswunsch-Meßeinrichtung, die die größere Abweichung zu dem Bremswunsch-Signal aus der dritten Meßgröße zeigt, als fehlerhaft lokalisiert wird.

12. Verfahren nach einem der Ansprüche 1 bis 11, **dadurch gekennzeichnet, daß** in die Berechnung der Bremswunsch-Signale die Gradienten der Signale der Meßeinrichtungen mit einbezogen werden.

13. Verfahren nach einem der Ansprüche 1 bis 12, **dadurch gekennzeichnet, daß** die Bordspannung überwacht und das Überwachungsergebnis mit in die Fehlererkennung einbezogen wird.

14. Verfahren nach einem der Ansprüche 1 bis 13, **dadurch gekennzeichnet, daß** die Sensoren so ausgebildet sind, daß sie im Grundzustand des Bremspedals ein vorgegebenes Grundsignal (Lifesign-Signal) zur Erkennung eines Sensorfehlers abgeben.

15. Verfahren nach einem der Ansprüche 1 bis 14, **dadurch gekennzeichnet, daß** aus den Sensorsignalen für die Bremswunschbestimmung die Bremslichter angesteuert werden.

16. Verfahren nach einem der Ansprüche 1 bis 15, **dadurch gekennzeichnet, daß** vor der Fahrerbremswunschermittlung in einer erweiterten Signalverarbeitung der Sensorzustands-Status (ok/nicht ok) ermittelt und mit in die Fehlererkennung einbezogen wird.

17. Verfahren nach einem der Ansprüche 1 bis 16, **dadurch gekennzeichnet, daß** der Sensor, der das weitere Überwachungssignal liefert, auf Fehlerhaftigkeit überwacht wird.

18. Verfahren nach einem der Ansprüche 1 bis 17, **dadurch gekennzeichnet, daß** bei Auftreten eines 2-fach-Fehlers aus den vorhandenen Bremswunschsignalen ein Notmodus abgeleitet wird.

19. Vorrichtung zur Steuerung oder Regelung der Bremsanlage eines Fahrzeuges nach dem Brake-by-Wire-Prinzip, die ein Bremspedal (1) mit einer Pedalmechanik und eine Pedalsensorik, mindestens eine elektronische Auswerteeinheit und Radbremsmodule (15, 16, 17, 18) aufweist, mit
- einer Pedalerfassungseinheit (3) zum Erfassen der Bremspedalbetätigung durch den Fahrer, die aus wenigstens zwei Meßeinrichtungen aufgebaut ist, die die Bremspedalbetätigung charakterisierende Größen erfassen, und
- einer Auswerteeinheit welche den Bremswunsch des Fahrers der ein Maß für die erwinschte Bremswirkung der Bremsanlage darstellt, aus den Signalen der Meßeinrichtung ermittelt,
**dadurch gekennzeichnet,**
**daß** die Meßeinrichtungen (4, 5) so ausgebildet sind, daß sie dieselbe die Bremspedalbetätigung charakterisierende Größe zur Bestimmung des Bremswunsches durch die Auswerteeinheit (7) ermitteln und daß eine dritte Meßeinrichtung vorgesehen ist, die eine weitere Meßgräße (6) für die Überwachung der Pedalmechanik und der Pedalsensorik ermittelt die mit der durch die Meßeinrichtungen (4,5) ermittelten, die Bremspedalbetätigung charakterisieren den Mebgröße nicht identisch ist und die mit dem Bremswunschsignal in der elektronischen Auswerteeinheit (7, 10) verglichen wird, wobei: wenn eines der durch die Meßeinrichtungen (4,5) erzeugten Signale fehlerhaft ist, dieses fehlerhafte Signal durch das von der dritten Meßeinerichtung (6) rezeugte Signal ersetzt wird.

20. Vorrichtung nach Anspruch 19, **dadurch gekennzeichnet, daß** beide Meßeinrichtungen die gleichen Sensoren aufweisen.

21. Vorrichtung nach Anspruch 19 oder 20, **dadurch gekennzeichnet, daß** die beiden Bremswunsch-Meßeinrichtungen (4, 5) Sensoren zur Erfassung der Fahrer-Fußkraft, vorzugsweise der Pedalbetätigungskraft, aufweisen.

22. Vorrichtung nach Anspruch 19 oder 20, **dadurch gekennzeichnet, daß** die beiden Bremswunsch-Meßeinrichtungen (4, 5) Sensoren zur Erfassung des Pedalweges oder des Pedalwinkels aufweisen.

23. Vorrichtung nach einem der Ansprüche 20 bis 22, **dadurch gekennzeichnet, daß** einer der beiden Bremswunsch-Meßeinrichtungen (4, 5) eine geringere Auflösung besitzt.

24. Vorrichtung nach einem der Ansprüche 19 bis 22, **dadurch gekennzeichnet, daß** die Auswerteeinheit (10) direkt der Pedalerfassungseinheit (3) unter Bildung eines Pedalmoduls zugeordnet ist.

25. Vorrichtung nach einem der Ansprüche 19 bis 23, **dadurch gekennzeichnet, daß** die Auswerteeinheit (10) in einem Zentralrechner, der weitere Funktionen, wie das Ermitteln von ABS-Signalen, hat, enthalten ist, und daß die Radbremsmodule zusätzliche Rechner zur Ableitung des Bremswunschsignals aufweisen.

## Claims

1. A method for controlling or regulating the brake system of a vehicle according to the brake-by-wire principle, comprising a brake pedal (1) with mechanical pedal means (1a, 1b) and a pedal sensor system (4, 5, 6, 7), an electronic evaluation unit (10), and wheel brake modules (15, 16, 17, 18), with the steps:
- sensing when the driver actuates the brake pedal by at least two measuring devices (4, 5) that determine characteristic values of the brake pedal actuation,
- determining the driver's braking requirement, which represents a standard of the desired braking effect of the brake system, in the electronic evaluation unit (10), using the signals of the measuring devices (4, 5),
**characterized in that**
the measuring devices (4, 5) determine the same value characterizing the brake pedal actuation for defining the braking requirement, and **in that** a third measuring device (6) is provided which determines another measured value for monitoring the mechanical pedal means and the pedal sensor system, which measured value is not identical with the measured value that is determined by the measuring devices (4, 5) and characterizes the brake pedal actuation and which is compared with the braking requirement signal in the electronic evaluation unit (10), wherein if any one of the signals produced by the measuring devices (4, 5) is faulty, this faulty signal is replaced by the signal produced by the third measuring device (6).

2. A method according to claim 1,
**characterized in that** both measuring devices measure the same characteristic value by means of identical sensors.

3. A method according to claim 1 or 2,
**characterized in that** the characteristic value is the driver's foot force.

4. A method according to claim 3,
**characterized in that** the pedal actuation force is sensed to determine the driver's foot force.

5. A method according to claim 1 or 2,
**characterized in that** the characteristic value is the angle of adjustment of the brake pedal.

6. A method according to claim 1 or 2,
**characterized in that** the characteristic value is the pedal travel of the brake pedal.

7. A method according to any one of the claims 1 to 6,
**characterized in that** the other measured value for the monitoring reproduces a different physical value than the measuring devices based on which the braking requirement is determined.

8. A method according to claim 7,
**characterized in that** the other measured value is derived from the brake pedal travel or the adjustment angle of the brake pedal.

9. A method according to any one of claims 1 to 8,
**characterized in that** the braking requirement is derived from the signal of one of the two brake requirement measuring devices and fault detection is executed by comparing the signal of one measuring device with the signal of the second measuring device to check whether both signals lie within a specified tolerance.

10. A method according to claim 9,
**characterized in that** the signal representing the third measured value is used to localize the defective sensor of one of the two braking requirement measuring devices in the event that the two braking requirement measuring signals show an impermissible deviation, preferably by comparing each of the braking requirement measured signals with the monitoring signal derived from the third measured value.

11. A method according to any one of claims 1 to 10,
**characterized in that** one braking requirement signal is derived both from the two braking requirement measuring devices and from the third measured value, respectively, and **in that** each of the braking requirement signals of the two braking requirement measuring devices are compared with the braking requirement signal from the third measured value respectively, and the braking requirement measuring device that shows the greatest deviation from the braking requirement signal from the third measured value is localized as being defective.

12. A method according to any one of claims 1 to 11,
**characterized in that** the gradients of the signals of the measuring devices are included in the calculation of the braking requirement signals.

13. A method according to any one of claims 1 to 12,
**characterized in that** the on-board voltage is monitored and the result of the monitoring is included in the fault detection.

14. A method according to any one of claims 1 to 13,
**characterized in that** the sensors are designed in such a way that they emit a predefined basic signal (life-sign signal) for detecting a sensor fault when the brake pedal is in its basic state.

15. A method according to any one of claims 1 to 14,
**characterized in that** the brake lights are activated by the sensor signals used for determining the braking requirement.

16. A method according to any one of claims 1 to 15,
**characterized in that** prior to determining the driver's braking requirement, the status of the sensor (ok/not ok) is determined in an extended signal processing and included in the fault detection.

17. A method according to any one of claims 1 to 16,
**characterized in that** the sensor that provides the additional monitoring signal is monitored for faulty operation.

18. A method according to any one of claims 1 to 17,
**characterized in that** an emergency mode is derived from the existing braking requirement signals when a two-fold error occurs.

19. A device for controlling or regulating the brake system of a vehicle according to the brake-by-wire principle, comprising a brake pedal (1) with mechanical pedal means and a pedal sensor system, at least one electronic evaluation unit, and wheel brake modules (15, 16, 17, 18), with
- a pedal sensing unit (3) for sensing when the driver actuates the brake pedal, which comprises at least two measuring devices that determine the characteristic values of the brake pedal actuation, and
- an evaluation unit that determines the driver's braking requirement, which represents a standard of the desired braking effect of the brake system, on the basis of the signals of the measuring device,
**characterized in that**
the measuring devices (4, 5) are designed in such a way that they determine the same value characterizing the brake pedal actuation for defining the braking requirement in the evaluation unit (7), and **in that** a third measuring device (6) is provided which determines another measured value for monitoring the mechanical pedal means and pedal sensor system, which measured value is not identical with the measured value that is determined by the measuring devices (4, 5) and characterizes the brake pedal actuation and which is compared with the braking requirement signal in the electronic evaluation unit (7, 10), wherein if any one of the signals produced by the measuring devices (4, 5) is faulty, this faulty signal is replaced by the signal produced by the third measuring device (6).

20. A device according to claim 19,
**characterized in that** both measuring devices have identical sensors.

21. A device according to claim 19 or 20,
**characterized in that** the two braking requirement measuring devices (4, 5) include sensors for sensing the driver's foot force, preferably, the pedal actuation force.

22. A device according to claim 19 or 20,
**characterized in that** the two braking requirement devices (4, 5) include sensors for sensing the pedal travel or the pedal angle.

23. A device according to any one of claims 20 to 22,
**characterized in that** one of the two braking requirement measuring devices (4, 5) has a lower resolution.

24. A device according to any one of claims 19 to 22,
**characterized in that** the evaluation unit (10) is directly associated with the pedal sensing unit (3) and forms a pedal module.

25. A device according to any one of claims 19 to 23,
**characterized in that** the evaluation unit (10) is part of a central computer that has such additional functions as determining ABS signals, and **in that** the wheel brake modules include additional computers for deriving the braking requirement signal.

## Revendications

1. Procédé de commande ou de régulation du dispositif de freinage d'un véhicule conformément au principe frein-par-fil, qui comprend une pédale de frein (1) avec un mécanisme de pédale (1a, 1b) et un dispositif capteur de pédale (4, 5, 6, 7), une unité d'analyse électronique (10) et des modules de frein de roue (15, 16, 17, 18), comportant les étapes consistant :
- à détecter l'actionnement de pédale de frein par le conducteur au moyen d'au moins deux dispositifs de mesure (4, 5) qui relèvent des grandeurs caractérisant l'actionnement de pédale de frein,
- à déterminer le souhait de freinage du conducteur, qui constitue un critère de l'effet de freinage souhaité du système de freinage, à partir des signaux des dispositifs de mesure (4, 5) dans l'unité d'analyse électronique (10),
**caractérisé**
**en ce que** les dispositifs de mesure (4, 5) relèvent, pour la détermination du souhait de freinage, les mêmes grandeurs caractérisant l'actionnement de pédale de frein, et en ce qu'il est prévu un troisième dispositif de mesure (6) qui relève, pour la surveillance du mécanisme de pédale et du dispositif capteur de pédale, une autre grandeur qui n'est pas identique à la grandeur de mesure relevée par les dispositifs de mesure (4, 5) et caractérisant l'actionnement de pédale de frein, et qui est comparée au signal de souhait de freinage dans l'unité d'analyse électronique (10), et lorsque l'un des signaux produits par les dispositifs de mesure (4, 5) est défectueux, ce signal défectueux est remplacé par le signal produit par le troisième dispositif de mesure (6).

2. Procédé suivant la revendication 1, **caractérisé en ce que** les deux dispositifs de mesure mesurent, au moyen de capteurs identiques, les mêmes grandeurs caractéristiques.

3. Procédé suivant la revendication 1 ou 2, **caractérisé en ce que** la grandeur caractéristique est la force au pied du conducteur.

4. Procédé suivant la revendication 3, **caractérisé en ce que** la force d'actionnement de pédale est détectée pour la détermination de la force au pied du conducteur.

5. Procédé suivant la revendication 1 ou 2, **caractérisé en ce que** la grandeur caractéristique est l'angle de changement de position de la pédale de frein.

6. Procédé suivant la revendication 1 ou 2, **caractérisé en ce que** la grandeur caractéristique est la course de pédale de la pédale de frein.

7. Procédé suivant l'une des revendications 1 à 6, **caractérisé en ce que** l'autre grandeur de mesure servant à la surveillance reproduit une autre grandeur physique que les dispositifs de mesure à partir desquels le souhait de freinage est déterminé.

8. Procédé suivant la revendication 7, **caractérisé en ce que** l'autre grandeur de mesure est déduite de la course de pédale ou de l'angle de changement de position de la pédale de frein.

9. Procédé suivant l'une des revendications 1 à 8, **caractérisé en ce que** le souhait de freinage est déduit du signal de l'un des deux dispositifs de mesure de souhait de freinage et une constatation de défaillance est effectuée en vérifiant ce signal du premier dispositif de mesure vis-à-vis du signal du second dispositif de mesure sur la question de savoir si les deux signaux sont situés dans les limites d'une tolérance préfixée.

10. Procédé suivant la revendication 9, **caractérisé en ce que**, pour le cas où les deux signaux de mesure de souhait de freinage présentent un écart inadmissible, le signal représentant la troisième grandeur de mesure est utilisé pour localiser le capteur entaché de défaillance de l'un des deux dispositifs de mesure de souhait de freinage, en comparant de préférence chacun des signaux de mesure de souhait de freinage au signal de surveillance déduit de la troisième grandeur de mesure.

11. Procédé suivant l'une des revendications 1 à 10, **caractérisé en ce que**, de chacun des deux dispositifs de mesure de souhait de freinage et également de la troisième grandeur de mesure, il est déduit un signal de souhait de freinage respectif, et les signaux de souhait de freinage des deux dispositifs de mesure de souhait de freinage sont comparés chacun au signal de souhait de freinage provenant de la troisième grandeur de mesure, celui des dispositifs de mesure de souhait de freinage qui présente le plus grand écart vis-à-vis du signal de souhait de freinage provenant de la troisième grandeur de mesure est localisé comme étant défaillant.

12. Procédé suivant l'une des revendications 1 à 11, **caractérisé en ce que** les gradients des signaux des dispositifs de mesure sont intégrés dans le calcul des signaux de souhait de freinage.

13. Procédé suivant l'une des revendications 1 à 12, **caractérisé en ce que** la tension de bord est surveillée et le résultat de la surveillance est intégrée dans la constatation de défaillance.

14. Procédé suivant l'une des revendications 1 à 13, **caractérisé en ce que** les capteurs sont agencés de manière à fournir, dans l'état de base de la pédale de frein, un signal de base préfixé (signal de signe de vie) en vue de la constatation d'une défaillance de capteurs.

15. Procédé suivant l'une des revendications 1 à 14, **caractérisé en ce que** les feux de freinage sont activés d'une manière commandée à partir des signaux de capteurs servant à la détermination de souhait de freinage.

16. Procédé suivant l'une des revendications 1 à 15, **caractérisé en ce qu'**avant la détermination de souhait de freinage du conducteur, dans un traitement de signal élargi, le statut d'état de capteur (ok/non ok) est déterminé et est intégré dans la constatation de défaillance.

17. Procédé suivant l'une des revendications 1 à 16, **caractérisé en ce que** le capteur qui délivre l'autre signal de surveillance est surveillé en ce qui concerne le fait d'être entaché d'une défaillance.

18. Procédé suivant l'une des revendications 1 à 17, **caractérisé en ce qu'**en cas d'apparition d'une défaillance se présentant deux fois, un mode de secours est déduit à partir des signaux de souhait de freinage présents.

19. Dispositif de commande ou de régulation du dispositif de freinage d'un véhicule conformément au principe frein-par-fil, qui comprend une pédale de frein
(1) avec un mécanisme de pédale (1a, 1b) et un dispositif capteur de pédale (4, 5, 6, 7), au moins une unité d'analyse électronique (10) et des modules de frein de roue (15, 16, 17, 18), comprenant :
- une unité de détection de pédale (3), servant à détecter l'actionnement de pédale de frein par le conducteur, qui est constituée d'au moins deux dispositifs de mesure qui détectent des grandeurs caractérisant l'actionnement de pédale de frein, et
- une unité d'analyse qui détermine le souhait de freinage du conducteur, qui constitue un critère de l'effet de freinage souhaité du système de freinage, à partir des signaux du dispositif de mesure,
**caractérisé**
**en ce que** les dispositifs de mesure (4, 5) sont agencés de façon à relever, en vue de la détermination du souhait de freinage et au moyen de l'unité d'analyse, les mêmes grandeurs caractérisant l'actionnement de pédale de frein et en ce qu'il est prévu, un troisième dispositif de mesure (6) qui relève, pour la surveillance du mécanisme de pédale et du dispositif de capteurs de pédale, une autre grandeur de mesure qui est comparée au signal de souhait de freinage dans l'unité d'analyse électronique (7, 10), et si l'un des signaux produits par les dispositifs de mesure (4, 5) est défectueux, ce signal défectueux est remplacé par le signal produit par le troisième dispositif de mesure (6).

20. Dispositif suivant la revendication 19, **caractérisé en ce que** les deux dispositifs de mesure comprennent des capteurs identiques.

21. Dispositif suivant la revendication 19 ou 20, **caractérisé en ce que** les deux dispositifs de mesure de souhait de freinage (4, 5) comprennent des capteurs servant à détecter la force au pied du conducteur, de préférence la force d'actionnement de pédale.

22. Dispositif suivant la revendication 19 ou 20, **caractérisé en ce que** les deux dispositifs de mesure de souhait de freinage (4, 5) comprennent des capteurs servant à détecter la course de pédale ou l'angle de pédale.

23. Dispositif suivant l'une des revendications 20 à 22, **caractérisé en ce que** l'un des deux dispositifs de mesure de souhait de freinage (4, 5) présente une résolution plus faible.

24. Dispositif suivant l'une des revendications 19 à 22, **caractérisé en ce que** l'unité d'analyse (10) est associée directement à l'unité de détection de pédale (3) en formant un module de pédale.

25. Dispositif suivant l'une des revendications 19 à 23, **caractérisé en ce que** l'unité d'analyse (10) est contenue dans un calculateur central qui présente d'autres fonctions, telles que la détermination de signaux ABS, et **en ce que** les modules de frein de roue comportent des calculateurs supplémentaires servant à déduire le signal de souhait de freinage.
